# EUROPÄISCHE PATENTSCHRIFT

(11) **EP 2 000 266 B1**
(45) Veröffentlichungstag und Bekanntmachung des Hinweises auf die Patenterteilung: **04.11.2009**
(21) Anmeldenummer: 07011089.5
(22) Anmeldetag: 06.06.2007
(51) Int. Cl.: B25F 5/02, H01M 2/10

(54) **Akkubetriebenes Elektrohandwerkzeuggerät**
Battery-driven electric machine tool
Machine-outil electrique motorisé à batterie

(43) Veröffentlichungstag der Anmeldung: 10.12.2008
(73) Patentinhaber: Metabowerke GmbH, 72602 Nürtingen (DE)
(72) Erfinder: Cong, Pham, 72793 Pfullingen (DE); Däschler, Arttu, 73630 Remshalden (DE); Fischer, Werner, 72622 Nürtingen (DE); Schwarz, Stefan, Dipl.Ing.(FH), 72622 Nürtingen (DE)
(74) Vertreter: Dreiss

(56) Entgegenhaltungen:
- EP-A- 1 463 274
- EP-A- 1 683 608
- EP-A- 1 744 386
- GB-A- 2 303 018

## Beschreibung

Die Erfindung betrifft ein akkubetriebenes Elektrohandwerkzeuggerät gemäß Oberbegriff des Anspruchs 1. Ein solches Gerät ist bekannt aus EP-A-1 683 608.

Akkubetriebene Elektrohandwerkzeuggeräte sind bekannt. Sie umfassen in der Regel ein Maschinengehäuseteil und ein Akkugehäuseteil. Dazu wird das Akkugehäuseteil häufig über eine Schiebesitzaufnahme auf das Maschinengehäuseteil aufgeschoben und in einer Betriebsposition an dem Maschinengehäuseteil arretiert. Die Arretierung des Akkugehäuseteils mit dem Maschinengehäuseteil wird über eine Verriegelungseinrichtung gewährleistet. Dabei greift beispielsweise ein Rastelement des Akkugehäuseteils in eine Aufnahme des Maschinengehäuseteils so ein, dass das Akkugehäuseteil gegen ein Herausrutschen aus der Schiebesitzaufnahme gesichert ist. Es hat sich jedoch als nachteilig herausgestellt, dass bei derartigen Verriegelungen aufgrund von Fertigungstoleranzen ein Spiel zwischen den Teilen der Verriegelungseinrichtung nie ganz zu vermeiden ist und das Akkugehäuseteil in der Schiebsitzaufnahme "wackelt", was zu Geräuschen führt.

Der Erfindung liegt die Aufgabe zugrunde, ein akkubetriebenes Elektrohandwerkzeuggerät vorzuschlagen, bei dem die Probleme nicht vorliegen.

Erfindungsgemäß wird zur Lösung dieser Aufgabe ein akkubetriebenes Elektrohandwerkzeuggerät mit den Merkmalen des Anspruchs 1 vorgeschlagen.

Dadurch wird ein Wackeln der Teile der Verriegelungseinrichtung vermieden. Durch das Vorspannen des Rastelements in Verriegelungsrichtung des Akkugehäuseteils durch das erste Federelements wird das Rastelement kraftbeaufschlagt gegen das Akkugehäuseteil gedrückt. Dadurch wird das Akkugehäuseteil kraftbeaufschlagt in die Schiebsitzaufnahme gedrückt und einem Wackeln somit vorgebeugt.

Ferner ist vorgesehen, dass die Schiebesitzaufnahme an einem Handgriff des Maschinengehäuseteils ausgebildet ist. Die Anordnung der Schiebesitzaufnahme an dem Handgriff ermöglicht es, dass das Akkugehäuseteil für den Benutzer einfach in die Betriebsposition aufschiebbar ist.

Ein weiterführendes Ausführungsbeispiel des akkubetriebenen Elektrohandwerkzeuggeräts sieht vor, dass die Schiebesitzaufnahme am unteren Ende des Handgriffs und im Wesentlichen quer zu seiner Griffachse verläuft. Vorteilhaft bei dieser Anordnung der Schiebesitzaufnahme ist, dass das Akkugehäuseteil auf den Handgriff aufschiebbar ist, während der Benutzer das Elektrohandwerkzeuggerät am Handgriff hält. Durch die Anordnung am untern Ende des Handgriffs wird ein gemeinsamer Massenschwerpunkt von Maschinengehäuseteil und Akkugehäuseteil nach unten verlagert. Dadurch ist es einem Benutzer wesentlich leichter, das akkubetriebene Elektrohandwerkzeuggerät zu führen.

Es kann sich aber auch als vorteilhaft erweisen, wenn die Schiebesitzaufnahme im Wesentlichen parallel zur Griffachse verläuft, so dass das Akkugehäuse parallel zur Griffachse aufgeschoben werden kann. Es kann dabei so geformt sein, dass es in seiner Haptik die Funktion des Handgriffs unterstützt. Vorteilhaft bei diesem Ausführungsbeispiel ist, dass das akkubetriebene Elektrohandwerkzeuggerät bei dieser Kombination von Maschinengehäuseteil und Akkugehäuseteil besonders kompakt ist.

Erfindungsgemäß ist vorgesehen, dass die Ausnehmung eine geneigte erste Seitenfläche aufweist. Von besonderem Vorteil ist dabei, dass das in die Aussparung eingreifende Rastelement durch Druck auf die geneigte Fläche dadurch das Akkugehäuseteil in die Schiebesitzaufnahme drückt. Damit ist gewährleistet, dass die Federkraft auf das Akkugehäuseteil so übertragen wird, dass dieses in Aufnahmerichtung in die Schiebsitzaufnahme gedrückt wird und dadurch ein Wackeln verhindert.

Ferner wird ein Ausführungsbeispiel des akkubetriebenen Elektrohandwerkzeuggeräts vorgeschlagen, das sich dadurch auszeichnet, dass das Rastelement und/oder das manuelle Betätigungsorgan Kontaktflächen aufweist, über die das Rastelement und das manuelle Betätigungsorgan einander berühren, wobei die Kontaktflächen als Keilflächen ausgebildet sind. Es ist beispielsweise denkbar das nur die Kontaktfläche des manuellen Betätigungsorgans oder nur die Kontaktfläche des Rastelements geneigt ist und auf jeweils nur einer Seitenkante des anderen aufliegt. Darüber hinaus können auch beide Kontaktflächen geneigt sein und zwar voraussichtlich derart, dass sich Betätigungsorgan und Rastelement flächig berühren. Ein besonderer Vorteil der geneigten Flächen ist, dass beispielsweise bei einer Krafteinwirkung des Betätigungsorgans auf das Rastelement eine Umlenkung der Kraft stattfindet. Durch die Kraftumlenkung ist eine Bewegung des Rastelements quer zur Stellrichtung des Betätigungsorgans möglich.

Darüber hinaus wird ein Ausführungsbeispiel des akkubetriebenen Elektrohandwerkzeuggeräts vorgeschlagen, das sich dadurch auszeichnet, dass das Rastelement eine Öffnung aufweist, in welche das manuelle Betätigungsorgan zumindest beim Entriegeln eingreift. Darüber hinaus kann die Öffnung so vorgesehen sein, dass bei Betätigung des manuellen Betätigungsorgans die dadurch resultierende Bewegung des Rastelements quer zur Stellrichtung des Betätigungsorgans geführt wird.

Ferner wird ein Ausführungsbeispiel des akkubetriebenen Elektrohandwerkzeuggeräts vorgeschlagen, welches sich dadurch auszeichnet, dass das manuelle Betätigungsorgan im Wesentlichen scheibenförmig ausgebildet ist was eine einfache Herstellung bedeutet.

Ein weiteres Ausführungsbeispiel des akkubetriebenen Elektrohandwerkzeuggeräts sieht vor, dass das erste Federelement eine Druckfeder und/oder das zweite Federelement eine Schenkelfeder ist.

Ferner wird ein Ausführungsbeispiel des akkubetriebenen Elektrohandwerkzeuggeräts vorgeschlagen, das sich dadurch auszeichnet, dass die Bewegungsrichtung des manuellen Betätigungsorgans im Wesentlichen quer zur Bewegungsrichtung des Rastelements verläuft.

Darüber hinaus wird ein Ausführungsbeispiel des akkubetriebenen Elektrohandwerkzeuggeräts vorgeschlagen, das sich dadurch auszeichnet, dass das Betätigungsorgan quer zu seiner Bewegungsrichtung eine Vertiefung aufweist, in welche das zweite Federelement eingreift. Vorteilhaft dabei ist, dass das zweite Federelement an der Innenseite des Handgriffs vorgesehen sein kann.

Ferner wird ein Ausführungsbeispiel des akkubetriebenen Elektrohandwerkzeuggeräts vorgeschlagen, welches sich dadurch auszeichnet, dass das Betätigungsorgan einen ersten im Wesentlichen ebenen Abschnitt aufweist, der in einen zweiten im Bezug auf den ersten Abschnitt geneigten Abschnitt übergeht. Vorteilhaft dabei ist, dass der geneigte zweite Abschnitt eine Keilfläche bildet, die mit dem Rastelement zusammenwirken kann. Insbesondere durch diese Ausbildung lässt sich erreichen, dass bei Entriegelung das Rastelements entgegen der Federvorspannung und damit in Entriegelungsrichtung bewegt werden kann.

Schließlich wird ein Ausführungsbeispiel des akkubetriebenen Elektrohandwerkzeuggeräts vorgeschlagen, welches sich dadurch auszeichnet, dass das Betätigungsorgan und/oder das Rastelement über Führungsmittel längsverschieblich angeordnet sind. Von Vorteil ist dabei, dass durch die nut- und federartigen Führungsmittel einem Wackeln von Betätigungsorgan und/oder Rastelement bei einer durch Krafteinwirkung, beispielsweise durch die Federelemente oder den Benutzer, geführt wird und einem Wackeln oder Schlingern im Zuge des Bewegungsvorgangs vorgebeugt wird.

Weitere Vorteile ergeben sich aus den Unteransprüchen.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen akkubetriebenen Elektrohandwerkzeuggeräts. In der Zeichnung zeigt:

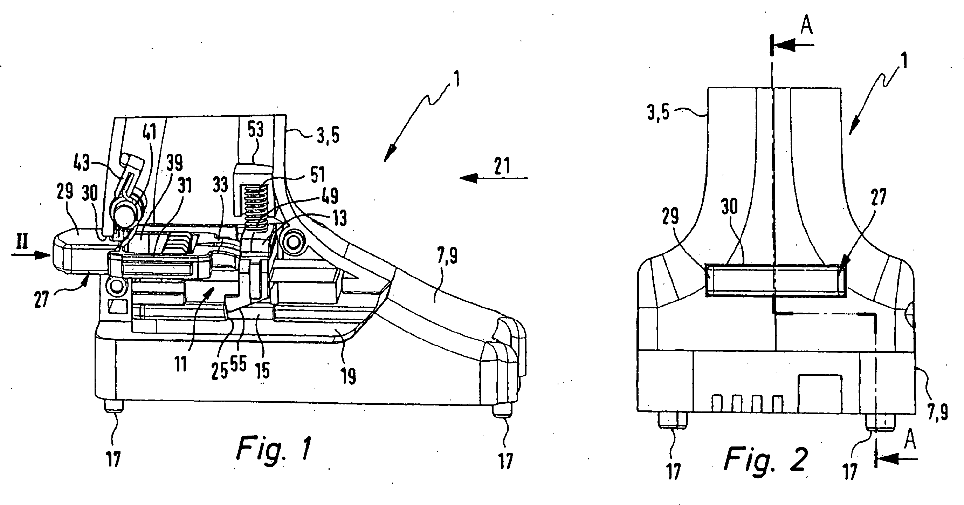

- Figur 1: eine perspektivische schematische durchbrochene Darstellung eines Handgriffs eines Maschinengehäuseteils und eines Deckels eines Akkugehäuseteils;
- Figur 2: eine Aufsicht in Richtung des Pfeils II nach Figur 1;

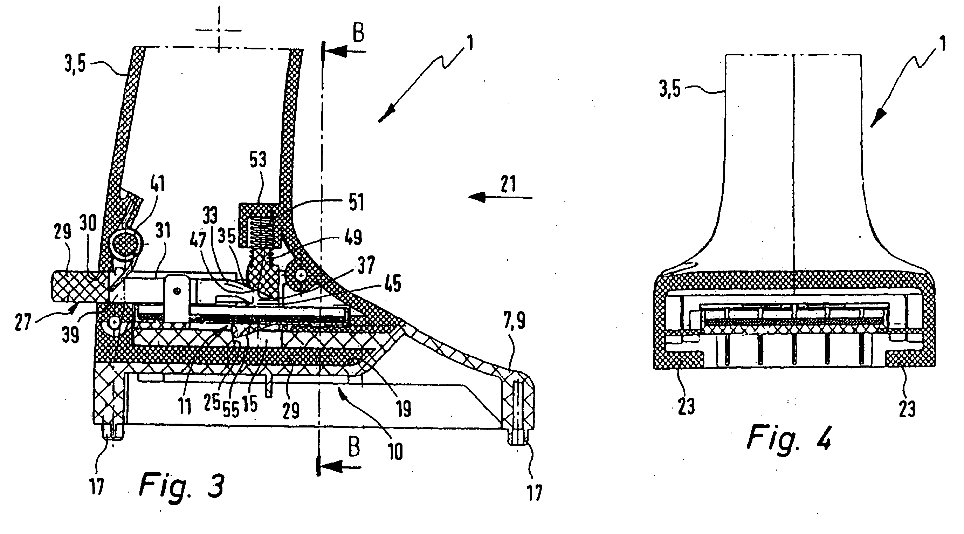

- Figur 3: eine Schnittansicht mit Schnittebene A-A gemäß Figur 2;
- Figur 4: einer Schnittansicht mit Schnitteben B-B gemäß Figur 3.

Aus den Figuren ist ein Teil eines akkubetriebenen Elektrohandwerkzeuggeräts 1 mit einem Handgriff 3 eines Maschinengehäuseteils 5 und mit einem Deckel 7 eines Akkugehäuseteils 9 ersichtlich. Deckel 7 des Akkugehäuseteils 9 und Handgriff 3 des Maschinengehäuseteils 5 sind über eine Verriegelungseinrichtung 11 miteinander verbunden. Das Akkugehäuseteil 9 ist über eine Schiebesitzaufnahme 10 in eine Betriebsposition am unteren Ende des Handgriffs 3 auf den Handgriff 3 aufgeschoben. In dieser Betriebsposition greift ein im Handgriff 3 angeordnetes Rastelement 13 der Verriegelungseinrichtung 11 in eine Ausnehmung 15 des Deckels 7 des Akkugehäuseteils 9 ein.

Das Akkugehäuseteil 9 weist auf der dem Handgriff 3 abgewandten Seite Fügeelemente 17 auf. Über diese ist es möglich, den Deckel 7 mit einer nicht dargestellten Unterschale des Akkugehäuseteils 9 zu verbinden.

Auf der dem Handgriff 3 zugewandten Seite des Deckels 7 des Akkugehäuseteils 9 sind Nuten 19 ersichtlich. Die Nuten 19 sind in einer Aufnahmerichtung 21 und nach innen hin randoffen. Die Nuten 19 sind dabei auf beiden Seiten des Deckels 7 des Akkugehäuseteils 9 so angeordnet, so dass sie mit in Aufnahmerichtung 21 erstreckten Stegen oder Schienen 23 des Handgriffs 3 die Schiebesitzaufnahme 10 bilden.

Die schon erwähnte Ausnehmung 15 des Deckels 7 befindet sich auf der dem Handgriff 3 zugewandten Oberseite des Akkugehäuseteils 9. Die Ausnehmung 15 ist von einer geneigten ersten Seitenfläche 25 begrenzt. Diese ist zur Aufnahmerichtung 21 so geneigt, dass das Rastelement 13 das Akkugehäuseteil 9 in der Schiebesitzaufnahme 10 in Aufnahmerichtung 21 drückt, wenn das Akkugehäuseteil 9 in seiner Betriebsposition ist. Das Rastelement 13 liegt dann unter Vorspannung gegen die geneigte Seitenfläche 25 an.

Neben dem Rastelement 13 und der Ausnehmung 15 weist die Verriegelungseinrichtung 11 ein Betätigungsorgan 27 auf. Das Betätigungsorgan 27 ragt mit einem Drücker 29 aus einer Durchbrechung 30 des Handgriffs 3 nach außen. An den Drücker 29 des Betätigungsorgans 27 schließt sich ein ebener Abschnitt 31 an, der im Wesentlichen scheibenförmig ist. Daran schließt sich in Richtung auf das Rastelement 13 ein geneigter Abschnitt 33 an, der bezüglich der Aufnahmerichtung 21 im Uhrzeigersinn geneigt ist. Dieser geneigte Abschnitt 33 durchgreift eine Öffnung 45 in dem Rastelement 13 Dabei berührt eine Kontaktfläche 35 des geneigten Abschnitts 33 des Betätigungsorgans 27 eine Kontaktfläche 37 des Rastelements 13. Das Betätigungsorgan 27 wird im Inneren des Handgriffs 3 in Aufschieberichtung 21 längsverschieblich geführt.

Das Betätigungsorgan 27 weist eine Vertiefung 39 auf, in die eine Schenkelfeder 41 eingreift. Die Schenkelfeder 41 stützt sich dabei mit einem ihrer Schenkel in einer Aufnahme 43 des Handgriffs 3 ab, und mit ihrem anderen Ende am Drücker 29 des Betätigungsorgans 27 ab. Dabei übt die Schenkelfeder 41 in Aufnahmerichtung 21 eine Kraft auf das Betätigungsorgan 27 aus, so dass der Drücker 29 aus dem Handgriff 3 nach Außen vorsteht.

Das Betätigungsorgan 27 greift mit seinem geneigten Abschnitt 33 in eine Öffnung 45 des Rastelements 13 so ein, dass die Kontaktfläche 35 des geneigten Abschnitts 33 mit der Kontaktfläche 37 der Öffnung 45 in Berührung steht. Dabei ist die Kontaktfläche 47 der Öffnung 45 bezüglich der Aufnahmerichtung 21 geneigt. Quer zur Aufnahmerichtung 21 weist das Rastelement 13 einen Bereich 49 auf, der innerhalb einer Druckfeder 51 angeordnet ist. Die Druckfeder 51 stützt sich mit einem ihrer Enden am Rastelement 13 ab und mit ihrem anderen Ende in einer Aufnahme 53 des Handgriffs 3 ab. Die Aufnahme 53 sowie die Aufnahme 43 sind bei dem in den Figuren gezeigten Ausführungsbeispiel einstückig mit dem Handgriff 3 ausgebildet. Sie sind so ausgebildet, dass sie zum einen der Schenkelfeder 41 und zum anderen der Druckfeder 51 eine führende Aufnahme bieten. Die Druckfeder 51 beaufschlagt das Rastelement 13 in Verriegelungsrichtung. An dem in Verriegelungsrichtung 21 gelegenen Ende des Rastelements 13 weist das Rastelement 13 einen vorstehenden Bereich 55 auf, dessen Oberfläche geneigt ist, um mit der geneigten ersten Seitenfläche 25 der Ausnehmung 15 des Akkugehäuseteils 9 zusammen zu wirken.

Im Folgenden wird das Zusammenwirken der einzelnen, aus den Figuren ersichtlichen Bauteile näher beschrieben.

Das Akkugehäuseteil 9 wird in Aufnahmerichtung 21 auf den Handgriff 3 aufgeschoben. Dabei greifen die Stege oder Schienen 23 des Handgriffs 3 in die Nuten 19 des Deckels 7 des Akkugehäuseteils 9 ein. Nuten 19 und Schienen 23 bilden dabei die Schiebesitzaufnahme 10.

Unter der Wirkung der Druckfeder 51 wird das Rastelement 13 stets in Verriegelungsrichtung belastet. Über das Zusammenwirken des geneigten vorstehenden Bereichs 55 und der geneigten Seitenfläche 25 des Deckels 7 des Akkugehäuseteils 9 wird das Akkugehäuseteil 9 in Aufnahmerichtung 21 in die Schiebesitzaufnahme 10 gedrückt. Das Akkugehäuseteil 9 wird also im Handgriff 3 in einer Betriebsposition arretiert.

Zum Lösen des Akkugehäuseteils 9 aus der Arretierung wird das Betätigungsorgan 27 entgegen der Aufnahmerichtung 21 manuell gedrückt. Bei der Verschiebung des Betätigungsorgans 27 entgegengesetzt zur Aufnahmerichtung 21 wird der geneigte Abschnitt 33 des Betätigungsorgans 27 in die Öffnung 45 des Rastelements 13 geschoben. Aufgrund der Neigung der geneigten Kontaktflächen 35 und 37 wird dabei das Rastelement 13 in Entriegelungsrichtung verschoben, so dass es aus der Ausnehmung 15 des Akkugehäuseteils freikommt. Dabei wird der vorstehende Bereich 55 des Rastelements 13 aus der Ausnehmung 15 des Deckels 7 des Akkugehäuseteils 9 herausbewegt. Sobald das Rastelement 13 außer Eingriff mit der Ausnehmung 15 ist, kann das Akkugehäuseteil 9 entgegen der Aufnahmerichtung 21 aus der Schiebesitzaufnahme vom Handgriff 3 abgezogen werden.

Aus den Figuren geht hervor, dass sowohl im Entriegelungs- als auch im Verriegelungszustand die einzelnen Elemente der Verriegelungseinrichtung 11 durch die beiden Federn 41 und 51 mit Kraft beaufschlagt sind. Sie werden gegen eine Endstellung gedrückt und liegen daher spielfrei an. Dadurch wird einem Wackeln oder Klappern der einzelnen Elemente vorgebeugt. Aus den Figuren geht weiterhin hervor, dass das Akkugehäuseteil 9 durch die Druckfeder 51 mit Kraft beaufschlagt gegen eine Endstellung/Anschlag mit dem Handgriff 3 gehalten wird. Dies hat zur Folge, dass das Akkugehäuseteil 9 und der Handgriff 3 fest und ohne zu wackeln lösbar miteinander verbunden sind.

## Patentansprüche

1. Akkubetriebenes Elektrohandwerkzeuggerät (1) mit einem Maschinengehäuseteil (5) und einem Akkugehäuseteil (9), wobei der Akkugehäuseteil (9) über eine Schiebesitzaufnahme (10) in eine Betriebsposition auf das Maschinengehäuseteil (5) aufschiebbar und über eine Verriegelungseinrichtung (11) in dieser Betriebsposition arretierbar ist, wobei die Verriegelungseinrichtung (11) ein manuelles Betätigungsorgan (27) zum Lösen umfasst, wobei die Verriegelungseinrichtung (11) ein Rastelement (13) umfasst und dem Rastelement (13) ein erstes Federelement (51) zugeordnet ist, welches das Rastelement (13) in Verriegelungsrichtung vorspannt und wobei dem manuellen Betätigungsorgan (27) ein zweites Federelement (41) zugeordnet ist, welches das Betätigungsorgan (27) in eine unbetätigte Endstellung vorspannt, **dadurch gekennzeichnet, dass** das manuelle Betätigungsorgan (27) und das Rastelement (13) im Handgriff (3) angeordnet sind und dass das Maschinengehäuseteil (5) mindestens eine Durchbrechung (30) aufweist durch welche das manuelle Betätigungsorgan (27) nach Außen geführt ist und dass eine der Verriegelungseinrichtung (11) in der Betriebsposition des Akkugehäuseteils (9) zugewandte Oberseite des Akkugehäuseteils (9) eine Ausnehmung (15) aufweist, in welche das Rastelement (13) im Verriegelungszustand eingreift und dass diese Ausnehmung (15) eine geneigte erste Seitenfläche (25) aufweist, gegen die das in die Ausnehmung (15) eingreifende Rastelement (13) unter Federkraft anliegt und so die Federkraft des ersten Federelements (51) auf das Akkugehäuseteil übertragen wird, so dass dieses in Aufnahmerichtung in die Schiebesitzaufnahme (10) gedrückt wird.

2. Akkubetriebenes Elektrohandwerkzeuggerät (1) nach Anspruch 1, **dadurch gekennzeichnet, dass** die Schiebesitzaufnahme (10) an einem Handgriff (3) des Maschinengehäuseteils (5) ausgebildet ist.

3. Akkubetriebenes Elektrohandwerkzeuggerät (1) nach Anspruch 2, **dadurch gekennzeichnet, dass** die Schiebesitzaufnahme (10) am unteren Ende des Handgriffs (3) und im Wesentlichen quer zu einer Griffachse verläuft.

4. Akkubetriebenes Elektrohandwerkzeuggerät (1) nach Anspruch 2, **dadurch gekennzeichnet, dass** die Schiebesitzaufnahme (10) im Wesentlichen parallel zur Griffachse der Handgriffs (3) verläuft.

5. Akkubetriebenes Elektrohandwerkzeuggerät (1) nach einem der vorhergehenden Ansprüche, **dadurch gekennzeichnet, dass** das Rastelement (13) und/oder das manuelle Betätigungsorgan (27) Kontaktflächen (35, 37) aufweist, über die das Rastelement (13) und das manuelle Betätigungsorgan (27) einander berühren wobei die Kontaktflächen (35, 37) als Keilflächen ausgebildet sind.

6. Akkubetriebenes Elektrohandwerkzeuggerät (1) nach einem der vorhergehenden Ansprüche, **dadurch gekennzeichnet, dass** das Rastelement (13) eine Öffnung (45) aufweist, in welche das manuelle Betätigungsorgan (27) zumindest beim Entriegeln eingreift.

7. Akkubetriebenes Elektrohandwerkzeuggerät (1) nach einem der vorhergehenden Ansprüche, **dadurch gekennzeichnet, dass** das manuelle Betätigungsorgan (27) im Wesentlichen scheibenförmig ausgebildet ist.

8. Akkubetriebenes Elektrohandwerkzeuggerät (1) nach einem der vorhergehenden Ansprüche, **dadurch gekennzeichnet, dass** das erste Federelement (51) eine Druckfeder und/oder das zweite Federelement (41) eine Schenkelfeder ist.

9. Akkubetriebenes Elektrohandwerkzeuggerät (1) nach einem der vorhergehenden Ansprüche, **dadurch gekennzeichnet, dass** die Bewegungsrichtung des manuellen Betätigungsorgans (27) im Wesentlichen quer zur Bewegungsrichtung des Rastelements (13) verläuft.

10. Akkubetriebenes Elektrohandwerkzeuggerät (1) nach einem der vorhergehenden Ansprüche, **dadurch gekennzeichnet, dass** das manuelle Betätigungsorgan (27) quer zu seiner Bewegungsrichtung eine Vertiefung (39) aufweist, in welche das zweite Federelement (41) eingreift.

11. Akkubetriebenes Elektrohandwerkzeuggerät (1) nach einem der vorhergehenden Ansprüche, **dadurch gekennzeichnet, dass** das manuelle Betätigungsorgan (27) einen ersten im Wesentlichen ebenen Abschnitt (31) aufweist der in einen zweiten in Bezug auf den ebenen Abschnitt (31) geneigten Abschnitt (33) übergeht.

12. Akkubetriebenes Elektrohandwerkzeuggerät (1) nach einem der vorhergehenden Ansprüche, **dadurch gekennzeichnet, dass** das manuelle Betätigungsorgan (27) und/oder das Rastelement (13) über Führungsmittel längsverschieblich angeordnet sind.

## Claims

1. Battery-operated electrical hand tool device (1) with a machine housing part (5) and a battery housing part (9), whereby the battery housing part (9) can be slid on by means of a sliding seat recess (10) into an operating position on the machine housing part (5) and locked in this operating position by means of a locking device (11), whereby the locking device (11) has a manual actuating element (27) for unlocking, whereby the locking device (11) has a latching element (13) and a first spring element (51) is assigned to the latching element (13), preloading the latching element (13) in the locking direction and whereby a second spring element (41) is assigned to the manual actuating element (27), which preloads the actuating element (27) towards an end position when not actuated, **characterised in that** the manual actuating element (27) and the latching element (13) are arranged in the handle (3) and that the machine housing part (5) has at least one aperture (30) through which the manual actuating element (27) is guided outwards and that an upper side of the battery housing part (9) facing towards the locking device (11) in the operating position of the battery housing part (9) has a recess (15) into which the latching element (13) engages in the locked condition and that a recess (15) has an inclined first side face (25) against which the latching element (13) engaging in the recess (15) rests under spring force and thus the spring force of the first spring element (51) is transferred to the battery housing part so that the latter is forced into the sliding seat recess (10) in the direction of the recess.

2. Battery-operated electrical hand tool device (1) in accordance with claim 1, **characterised in that** the sliding seat recess (10) is formed on a handle (3) of the machine housing part (5).

3. Battery-operated electrical hand tool device (1) in accordance with claim 2, **characterised in that** the sliding seat recess (10) runs essentially transversely to the axis of the handle at the lower end of the handle (3).

4. Battery-operated electrical hand tool device (1) in accordance with claim 2, **characterised in that** the sliding seat recess (10) runs essentially parallel to the axis of the handle at the lower end of the handle (3).

5. Battery-operated electrical hand tool device (1) in accordance with one of the previous claims, **characterised in that** the latching element (13) and/or the manual actuating element (27) have/has contact surfaces (35, 37) on which the latching element (13) and the manual actuating element (27) touch each other whereby the contact surfaces (35, 37) are wedge-shaped.

6. Battery-operated electrical hand tool device (1) in accordance with one of the previous claims, **characterised in that** the latching element (13) has an aperture (45) in which the manual actuating element (27) engages at least during unlocking.

7. Battery-operated electrical hand tool device (1) in accordance with one of the previous claims, **characterised in that** the manual actuating element (27) is essentially disk-shaped.

8. Battery-operated electrical hand tool device (1) in accordance with one of the previous claims, **characterised in that** the first spring element (51) is a compression spring and/or the second spring element (41) is a leg spring.

9. Battery-operated electrical hand tool device (1) in accordance with one of the previous claims, **characterised in that** the direction of motion of the manual actuating element (27) runs essentially transversely to the direction of motion of the latching element (13).

10. Battery-operated electrical hand tool device (1) in accordance with one of the previous claims, **characterised in that** the manual actuating element (27) has a depression (39) that runs transversely to the direction of motion of said actuating element, whereby said second spring element (41) engages in said depression.

11. Battery-operated electrical hand tool device (1) in accordance with one of the previous claims, **characterised in that** the manual actuating element (27) has a first essentially level section (31) which moves across into a second section (33) inclined in relation to the level section (31).

12. Battery-operated electrical hand tool device (1) in accordance with one of the previous claims, **characterised in that** the manual actuating element (27) and/or the latching element (13) are/is arranged so that they/it can be moved longitudinally by means of a guide arrangement.

## Revendications

1. Outil électrique portatif (1) actionné par batterie, comportant un carter de machine (5) et un boîtier de batterie (9), ledit boîtier de batterie (9) pouvant être ouvert par coulissement par l'intermédiaire d'un logement à coulisse (10) dans une position de service sur le carter de machine (5) et pouvant être bloqué dans ladite position de service par un dispositif de verrouillage (11), ledit dispositif de verrouillage (11) comportant un organe d'actionnement (27) manuel pour le déclenchement dudit dispositif, ledit dispositif de verrouillage (11) comportant un élément de blocage (13), et un premier ressort (51) étant associé à l'élément de blocage (13), par lequel ledit élément de blocage (13) est précontraint dans la direction de verrouillage, et un deuxième ressort (41) étant associé à l'organe d'actionnement (27) manuel, par lequel ledit organe d'actionnement (27) manuel est précontraint dans une position finale inactive, **caractérisé en ce que** ledit organe d'actionnement (27) manuel et ledit élément de blocage (13) sont disposés dans la poignée (3), et **en ce que** le carter de machine (5) comporte au moins un passage (30) à travers lequel l'organe d'actionnement (27) manuel est guidé vers l'extérieur, et **en ce qu'**une face supérieure du boîtier de batterie (9), orientée vers le dispositif de verrouillage (11) dans la position de service, comporte un évidement (15), dans lequel s'engage l'élément de blocage (13) dans la position de verrouillage, et **en ce que** ledit évidement (15) comporte une première face latérale (25) inclinée, contre laquelle l'élément de blocage (13), engagé dans l'évidement (15), vient en appui sous l'effet de la force d'un ressort et la force de ressort du premier ressort (51) est ainsi transmise sur le boîtier de batterie, de telle sorte que celui-ci est poussé dans la direction de réception dans le logement à coulisse (10).

2. Outil électrique portatif (1) actionné par batterie selon la revendication 1, **caractérisé en ce que** le logement à coulisse (10) est réalisé dans une poignée (3) du carter de machine (5).

3. Outil électrique portatif (1) actionné par batterie selon la revendication 2, **caractérisé en ce que** le logement à coulisse (10) s'étend au niveau de l'extrémité inférieure de la poignée (3) et sensiblement transversalement à un axe de la poignée.

4. Outil électrique portatif (1) actionné par batterie selon la revendication 2, **caractérisé en ce que** le logement à coulisse (10) s'étend sensiblement parallèlement à l'axe de la poignée (3).

5. Outil électrique portatif (1) actionné par batterie selon l'une quelconque des revendications précédentes, **caractérisé en ce que** l'élément de blocage (13) et/ou l'organe d'actionnement (27) manuel ont des surfaces de contact (35, 37) par lesquelles l'élément de blocage (13) et l'organe d'actionnement (27) manuel se touchent mutuellement, lesdites surfaces de contact (35, 37) étant réalisées sous forme de surfaces en clavette.

6. Outil électrique portatif (1) actionné par batterie selon l'une quelconque des revendications précédentes, **caractérisé en ce que** l'élément de blocage (13) comporte un orifice (45), dans lequel s'engage l'organe d'actionnement (27) manuel au moins au moment du déverrouillage.

7. Outil électrique portatif (1) actionné par batterie selon l'une quelconque des revendications précédentes, **caractérisé en ce que** l'organe d'actionnement (27) manuel est réalisé sensiblement en forme de plaquette.

8. Outil électrique portatif (1) actionné par batterie selon l'une quelconque des revendications précédentes, **caractérisé en ce que** le premier ressort (51) est un ressort de pression et/ou le deuxième ressort (41) est un ressort à branches.

9. Outil électrique portatif (1) actionné par batterie selon l'une quelconque des revendications précédentes, **caractérisé en ce que** la direction de déplacement de l'organe d'actionnement (27) manuel est sensiblement transversale à la direction de déplacement de l'élément de blocage (13).

10. Outil électrique portatif (1) actionné par batterie selon l'une quelconque des revendications précédentes, **caractérisé en ce que** l'organe d'actionnement (27) manuel, transversalement à sa direction de déplacement, comporte un creux (39), dans lequel s'engage le deuxième ressort (41).

11. Outil électrique portatif (1) actionné par batterie selon l'une quelconque des revendications précédentes, **caractérisé en ce que** l'organe d'actionnement (27) manuel comporte une première partie (31) sensiblement plane, qui se prolonge par une deuxième partie (33) inclinée par rapport à la partie (31) plane.

12. Outil électrique portatif (1) actionné par batterie selon l'une quelconque des revendications précédentes, **caractérisé en ce que** l'organe d'actionnement (27) manuel et/ou l'élément de blocage (13) sont disposés de manière mobile longitudinalement par des moyens de guidage.
